Europäisches Patentamt

(19) European Patent Office

Office européen des brevets

(11) Veröffentlichungsnummer: **0 222 377**
A1

(12) # EUROPÄISCHE PATENTANMELDUNG

(21) Anmeldenummer: 86115686.7

(22) Anmeldetag: 12.11.86

(51) Int. Cl.⁴: **A 01 B 17/00**
A 01 B 3/46, A 01 B 15/18

(30) Priorität: 13.11.85 DE 3540158

(43) Veröffentlichungstag der Anmeldung:
20.05.87 Patentblatt 87/21

(84) Benannte Vertragsstaaten:
AT BE DE FR GB NL SE

(71) Anmelder: Krampe, Franz
Bergstrasse 5
D-4715 Ascheberg-Herbern(DE)

(72) Erfinder: Krampe, Franz
Bergstrasse 5
D-4715 Ascheberg-Herbern(DE)

(74) Vertreter: Patentanwälte Schulze Horn und Hoffmeister
Goldstrasse 36
D-4400 Münster(DE)

(54) Mehrschariger Pflug.

(57) Zur Intensivierung der Bodenbearbeitung weist ein mehrschariger Pflug in Bodenauswurfrichtung hinter den Pflugscharen eine mit einem Drehantrieb verbundene, schräg zur Pflugbewegungsrichtung verlaufende Welle mit trommelartig angeordneten Zerkleinerungszinken auf, die direkt in den Bodenumbruch der einzelnen Pflugschare eingreifen und zwangsweise so gedreht werden, daß der Bodenumbruch beschleunigt ausgeworfen wird.

Fig.1

EP 0 222 377 A1

## Mehrschariger Pflug

Die Erfindung betrifft einen mehrscharigen Pflug mit einem Zerkleinerungsgerät, das an zumindest einer drehbaren Welle trommelartig angeordnete, in den Boden eingreifende Zerkleinerungszinken aufweist.

Die US-PS 2 960 169 beschreibt einen mehrscharigen Pflug, bei dem das in Bewegungsrichtung hinter den Pflugscharen angeordnete Zerkleinerungsgerät harkenähnlich aufgebaut ist und bei dem die Zerkleinerungszinken an der drehbaren Welle in bestimmten Schrägstellungspositionen zum Boden festlegbar sind. Die Drehbarkeit der Welle dient somit nur zum Einstellen der Zerkleinerungszinken, die ihrerseits in nicht näher definierter Weise hinter den Pflugscharen in den Boden eingreifen.

Die US-PS 3 202 222 beschreibt einen Pflug, bei dem unmittelbar hinter einem Schneidmesser ein drehbares Zinkenrad angeordnet ist, das auf dem Boden abrollt, aber nicht in den direkten Umbruch eines pflugscharähnlichen Gebildes eingreift. Insoweit arbeitet dieses Zerkleinerungsgerät nach Art einer Scheibenegge.

Der vorliegenden Erfindung liegt die Aufgabe zugrunde, einen mehrscharigen Pflug der im Oberbegriff genannten Art so auszubilden, daß sich ohne maßgeblichen Zusatzaufwand eine wesentlich intensivere Bodenbearbeitung erzielen läßt.

Zur Lösung der gestellten Aufgabe zeichnet sich ein mehrschariger Pflug der im Oberbegriff genannten Art erfindungsgemäß durch die im Kennzeichen von Anspruch 1 aufgeführten Merkmale aus. Demnach sorgen die zwangsgedrehten Zerkleinerungszinken, die direkt in den Umbruch der Pflugscharen beschleunigend eingreifen, für eine äußerst intensive Bodendurchmischung und -lockerung. Anders als bei einem bloßen Mitziehen eines harkenähnlichen Gebildes oder beim bloßen Abrollen eines Zinkenrades erfolgen hierbei völlig andere Bewegungsvorgänge, weil die mit dem Pflug bewegten Zerkleinerungszinken an der schräggestellten Drehwelle infolge des Drehantriebes gleichzeitig in den Bodenumbruch greifen und diesen beschleunigend auswerfen.

In weiterer Ausgestaltung ist es äußerst zweckmäßig, gemäß Anspruch 2 vor jeden Pflugschar einen Vorschäler anzuordnen, der gemäß Anspruch 3 in Form einer kleinen Pflugschar ausgebildet sein kann. Mit einem derartigen Vorschäler läßt sich das Bodenbearbeitungsergebnis erheblich verbessern. Die Vorschäler sorgen dafür, daß dem nachgeschalteten Zerkleinerungsgerät ein ergiebigerer Bodenumbruch zur Verfügung steht, der infolge des Zwangsantriebes der gedrehten Zerkleinerungszinken ohne Schwierigkeiten bearbeitet werden kann.

An der Welle können gemäß Anspruch 4 vorzugsweise Bodenabweisscheiben vorgesehen sein, mittels derer Drehlagerungen der Welle geschützt werden können, ferner ein Festsetzen der Welle verhindert werden kann und ein seitliches Ausweichen des Bodenumbruchs aus dem Einflußbereich der Zerkleinerungszinken vermieden wird.

Eine praktische Ausführungsform zeichnet sich gemäß Anspruch 5 durch ein an der Welle befestigtes Antriebsrad aus, das gemäß Anspruch 6 ein Kettenrad sein kann. Dieses Antriebsrad des nachgeschalteten Zerkleinerungsgerätes ermöglicht ein einfaches Antreiben der Welle mit den Zerkleinerungszinken mittels eines an entfernter Stelle befindlichen Motorantriebs. Im Falle eines Kettenrades wird ein Schlupf völlig vermieden, wobei es dann allerdings zweckmäßig sein kann, eine Rutschkupplung im Bereich des Motorantriebs vorzusehen. Grundsätzlich wäre es natürlich auch möglich, einen beispielsweise elektromotorischen Antrieb am Zerkleinerungsgerät bzw. an der Welle selbst anzubringen.

In weiterer Ausgestaltung ist es gemäß Anspruch 7 bei einem Wendepflug zweckmäßig, jeder schwenkbaren Gruppe von Pflugscharen eine mitschwenkbare Welle, vorzugsweise mit einem Vorschäler und einem Vorschneider je Pflugschar, zuzuordnen. In diesen Fällen ist es möglich, den Wendepflug zu schwenken, ohne die Einzelteile des Zerkleinerungsgerätes zu verstellen.

Zur Reduzierung der Herstellungskosten und zum Vereinfachen des Gerätes kann es jedoch gemäß Anspruch 9 vorteilhaft sein, beiden Gruppen von Pflugscharen eine gemeinsame Welle zuzuordnen, die dann für die einzelnen Gruppen von Pflugscharen vertikal bewegbar sein muß.

Günstige Verhältnisse ergeben sich gemäß Anspruch 10 auch dadurch, daß hinter der Pflugscharlagerung ein abstützendes Laufrad vorgesehen ist. Dieses sorgt für eine einwandfreie Führung der einzelnen Pflugteile und verhindert ein zu weites Eingraben der Pflugscharen sowie Zerkleinerungszinken in den Boden. Demnach bildet das Laufrad eine Art Bezugspunkt, der die Arbeitsbereiche der Pflugscharen, der Vorschneider, der Vorschäler und der Zerkleinerungszinken definiert.

Zur Erhöhung der Stabilität und Standzeit der Zinken ist vorgesehen, daß diese in Wellennähe als die Welle umgebende Scheiben ausgebildet sind.

Die Erfindung wird nachfolgend an zeichnerisch dargestellten Ausführungsbeispielen näher erläutert. Es zeigen:

Figur 1 in einer perspektivischen Ansicht einen mehrscharigen Wendepflug, der zwei drehbare Wellen mit Zerkleinerungszinken aufweist,

Figur 2 in einer Draufsicht den Wendepflug aus Figur 1 und

Figur 3 in einer Teilansicht den Wendepflug aus Figur 1 und 2 im Bereich des Zerkleinerungsgerätes.

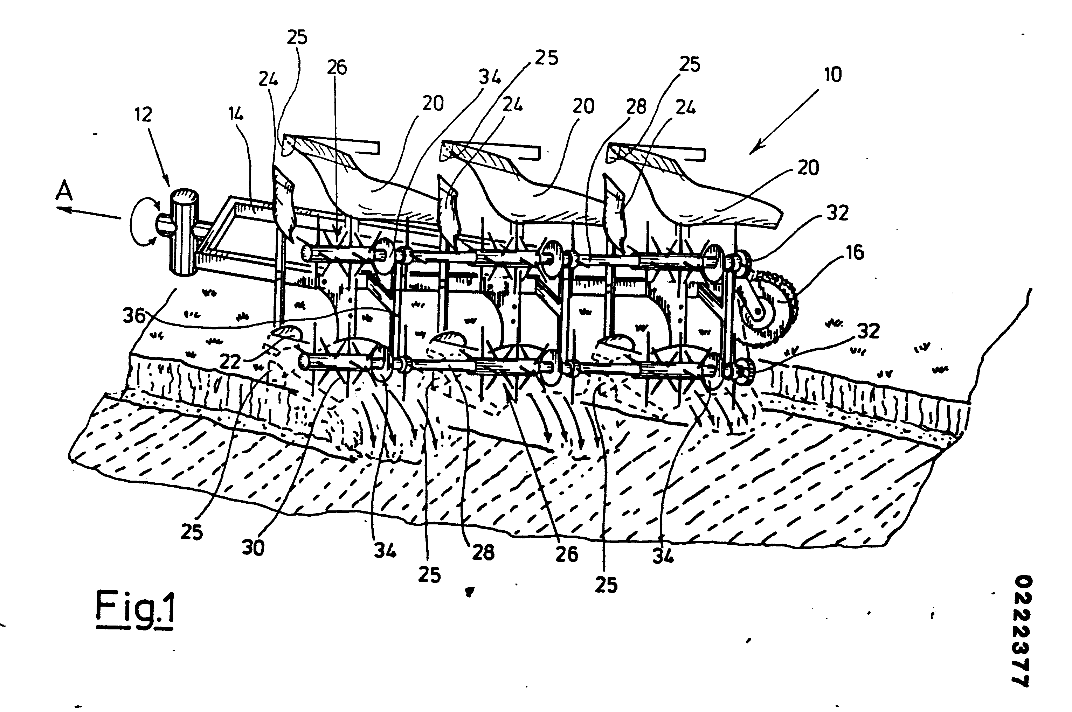

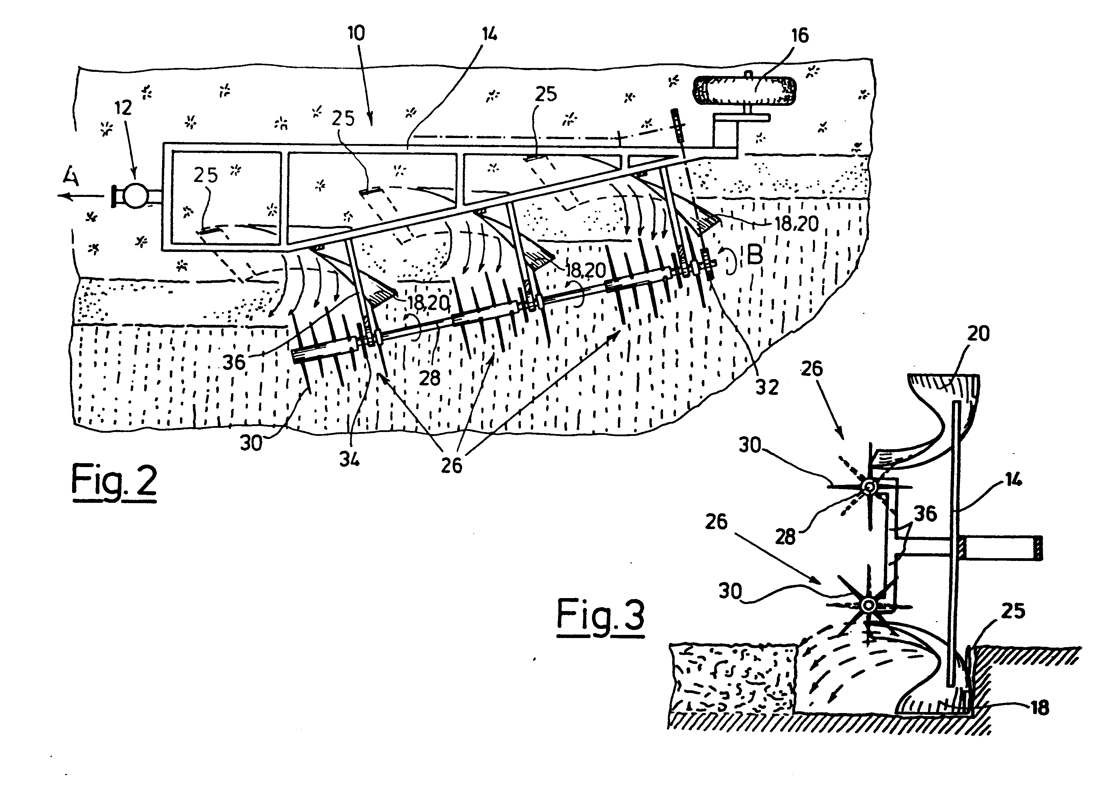

Gemäß den Figuren 1 und 2 weist ein mehrschariger Pflug 10 eine vorderseitige Lagerung 12 auf, die mit einem sich in Pfeilrichtung A bewegenden Zugfahrzeug zu verbinden ist. Der Pflug 10 besitzt einen Pflugrahmen 14, mit dem die einzelnen Pflugteile verbunden sind und der an seinem rückwärtigen Ende über ein Laufrad 16 auf dem Boden abgestützt ist. Der Pflug 10 ist als Wendepflug ausgebildet und um 180$^{\circ}$ um seine Längsachse verschwenkbar.

Der Pflug 10 besitzt zwei Gruppen von Pflugscharen 18 und 20. Während sich im dargestellten Arbeitszustand die Pflugscharen 18 in Bodeneingriff befinden, kommen die bei diesem Zustand oberseitigen Pflugscharen 20 beim Wenden des Pfluges 10 in Bodeneingriff. Demnach können die Pflugschare 18, 20 mit dem Pflugrahmen 14 durch ein nicht näher dargestelltes Mittel um 180$^{\circ}$ geschwenkt werden.

Vor den einzelnen Pflugscharen 18 und 20 befinden sich jeweils ein Vorschäler 22 bzw. 24 in Form einer kleinen Pflugschar. Im dargestellten Betriebszustand befindet sich der Vorschäler 22 in Bodeneingriff. Er sorgt dafür, daß sich ein insgesamt intensiverer Bodenumbruch ergibt, was für die Wirksamkeit eines nachgeschalteten Zerkleinerungsgerätes 26 von großer Bedeutung ist. Die Vorschäler 22 und 24 werden zusammen mit den Pflugscharen 18 und 20 beim Wenden des Pfluges um jeweils 180° geschwenkt. Im äußeren Drittel der Schneidkanten der Pflugscharen 20 ist jeweils ein an sich bekannter Vorschneider 25 angeordnet, der in Arbeitsstellung etwa senkrecht aufragt und den umzubrechenden Bodenstreifen seitlich vorschneidet. In dieser neuen Anordnung sorgt er für ein wirksames Unterpflügen von Pflanzenresten oder Dünger. In Auswurfrichtung hinter den Pflugscharen 18, 20 befindet sich jeweils eine etwa horizontal verlaufende Welle 28, die schräg zur Pflugbewegungsrichtung verläuft und zumindest im Auswurfbereich des Bodenumbruchs der einzelnen Pflugschare trommelartig angeordnete Zerkleinerungszinken 30 aufweist. Diese sind etwa radial verlaufend mit der zugehörigen Welle 28 verbunden und werden wie diese mittels eines im vorliegenden Fall einseitigen Antriebsrades 32 in Pfeilrichtung B zwangsweise gedreht. Das bedeutet, daß die Zerkleinerungszinken 30 direkt in den Bodenumbruch in Auswurfrichtung eingreifen und diesen beschleunigt auswerfen bzw. intensiv bearbeiten, so daß sich eine äußerst wirksame Bodendurchmischung und -lockerung ergibt. Beim Wenden des Pfluges kommen die Zerkleinerungszinken 30 unterschiedlicher Wellen 28 zum Einsatz, da die Wellen 28 mitschwenkbar sind. Dabei können die Zinken 30 z. B. konisch zulaufende Rundstäbe oder auch flache Messer mit einer Schneidkante sein.

Jedes Antriebsrad 32 kann beispielsweise in Form eines Riemen- oder Kettenrades ausgebildet und mit einem Drehantrieb an entfernter Stelle verbunden sein. Im Falle eines Kettenrades wird ein Schlupf sicher vermieden und ein kräftiger Antrieb der Zerkleinerungszinken gewährleistet, was bei schwerem Boden äußerst wichtig ist. Der nicht dargestellte Drehantrieb kann zweckmäßigerweise eine Sicherungskupplung, wie eine Rutschkupplung, aufweisen, die im Falle von Bodenhindernissen anspricht, damit das Zerkleinerungsgerät nicht beschädigt wird.

An jeder Welle 28 können sich Bodenabweisscheiben 34 befinden, die beispielsweise Drehlagerungen der Welle 28 im Bereich von Stützen 36 schützen können. Außerdem können die Bodenabweisscheiben 34 sicherstellen, daß der durch die Zerkleinerungszinken 30 zu bearbeitende Boden nicht seitlich ausweicht, sondern zwangsweise im Bearbeitungsbereich gehalten wird.

Wenn anders als bei dem Wendepflug aus Figur 1 statt zweier Wellen 28 nur eine Welle 28 vorhanden ist, muß diese beim Wenden der Pflugschare 18, 20 durch nicht näher dargestellte Mittel vertikal bewegbar sein, damit sie im Bodenbereich gehalten wird. Diese besonders einfache Bauform ist in den Zeichnungen nicht dargestellt.

Aus den Figuren 1 und 2 ist ersichtlich, daß auf jeder Welle 28 entsprechend der Anzahl der vorgeschalteten Pflugschare im vorliegenden Fall drei Gruppen von Zerkleinerungszinken 30 angeordnet sind. Diese befinden sich jeweils im Bodenumbruch-Bereich dreier zugeordneter Pflugschare 18 bzw. 20. Im Bereich der Bodenabweisscheiben 34 befinden sich auch nicht näher dargestellte Drehlagerungen zum Haltern der Wellen 28 an den Stützen 36. Es ist ferner erkennbar, daß sich jeweils ein Kranz der Gruppen von Zerkleinerungszinken an einer Seite der zugehörigen Bodenabweisscheibe 34 befindet, während die übrigen Kränze der jeweiligen Gruppe von Zerkleinerungszinken 30 an der anderen Seite der Bodenabweisscheibe 34 angeordnet sind.

**0222377**

In Figur 3 ist deutlicher dargestellt, daß der Wendepflug im Auswurfbereich eines jeden Pflugschares 18 bzw. 20 eine Welle 28 mit Zerkleinerungszinken 30 aufweist, wobei die Zerkleinerungszinken 30 der beiden Wellen 28 je nach Pflugwendung wechselseitig zum Einsatz kommen.

Ein derartiger Pflug mit einer Zwangsdrehung der nachgeschalteten Zerkleinerungszinken und mit den vorgeschalteten Vorschälern und Vorschneidern gewährleistet eine außerordentlich intensive Bodenbearbeitung. Außerdem ist der Pflug relativ einfach aufgebaut und macht bei herkömmlichen Pflügen nur relativ geringe Änderungen erforderlich, so daß auch nachträglich eine Umrüstung vorhandener Pflüge entsprechend der vorliegenden Erfindung möglich ist.

Anstelle von starr mit der bzw. den Welle(n) verbundenen Zinken kann der Pflug auch gelenkige Zinken aufweisen, die bei einer entsprechenden Wellendrehzahl von vorzugsweise einigen Hundert Umdrehungen pro Minute infolge der Fliehkraft radial abstehen. Beim Auftreffen auf harte Körper, wie z.B. Steine, kann der betreffende Zinken aber ausweichen, so daß die Haltbarkeit verbessert wird.

Patentansprüche:

1. Mehrschariger Pflug mit einem Zerkleinerungsgerät, das an zumindest einer drehbaren Welle trommelartig angeordnete, in den Boden eingreifende Zerkleinerungszinken aufweist, dadurch gekennzeichnet, daß die zumindest eine Welle (28) schräg zur Pflugbewegungsrichtung verläuft, daß die mit der Welle (28) drehbaren Zerkleinerungszinken (30) direkt in den Bodenumbruch der Pflugscharen (18; 20) eingreifen und daß die Welle (28) einen Drehantrieb (32) für ein in den Bodenumbruch beschleunigend eingreifendes Drehen der Zerkleinerungszinken (30) aufweist.

2. Pflug nach Anspruch 1, dadurch gekennzeichnet, daß vor jedem Pflugschar (18; 20) ein in den Boden eingreifender Vorschäler (22; 24) angeordnet ist.

3. Pflug nach Anspruch 2, dadurch gekennzeichnet, daß der Vorschäler (22; 24) in Form einer kleinen Pflugschar ausgebildet ist.

4. Pflug nach einem der Ansprüche 1 bis 3, gekennzeichnet durch an der Welle (28) befestigte Bodenabweisscheiben (34).

5. Pflug nach einem der Ansprüche 1 bis 4, gekennzeichnet durch ein an der Welle (28) befestigtes Antriebsrad (32).

6. Pflug nach Anspruch 5, dadurch gekennzeichnet, daß das Antriebsrad (32) als Kettenrad ausgebildet ist.

7. Pflug nach einem der Ansprüche 1 bis 6 in Form eines Wendepfluges mit zwei um eine etwa horizontale Achse schwenkbaren und wechselseitig in Bodeneingriff bringbaren Pflugschargruppen, dadurch gekennzeichnet, daß jeder Gruppe von Pflugscharen (18; 20) je eine mitschwenkbare Welle (28) mit Zerkleinerungszinken (30) zugeordnet ist.

8. Pflug nach Anspruch 7, dadurch gekennzeichnet, daß jeder Gruppe von Pflugscharen (18; 20) mitschwenkbare Vorschäler (22; 24) zugeordnet sind.

9. Pflug nach einem der Ansprüche 1 bis 6 in Form eines Wendepfluges mit zwei um eine etwa horizontale Achse schwenkbaren und wechselseitig in Bodeneingriff bringbaren Pflugschargruppen, dadurch gekennzeichnet, daß beiden Gruppen von Pflugscharen (18; 20) eine gemeinsame, vertikal bewegbare Welle (28) mit Zerkleinerungszinken (30) zugeordnet ist.

10. Pflug nach einem der Ansprüche 1 bis 9, gekennzeichnet durch ein hinter einer Pflugscharlagerung (12) angeordnetes abstützendes Laufrad (16).

11. Pflug nach einem der Ansprüche 1 bis 10, dadurch gekennzeichnet, daß die Zinken (30) in Wellennähe als die Welle (28) umgebende Scheiben ausgebildet sind.

12. Pflug nach einem der Ansprüche 1 bis 11, dadurch gekennzeichnet, daß jeder Pflugschar (18; 20) je ein Vorschneider (25) in Form einer an dem Innenrand des äußeren Drittels der Schneidkante angeordneten, etwa senkrecht aufragenden Schneidmessers zugeordnet ist.

13. Pflug nach einem der Ansprüche 1 bis 12, dadurch gekennzeichnet, daß die Zinken (30) gelenkig mit der Welle (28) verbunden sind und bei Arbeitsdrehzahl der Welle (28) radial nach außen ragen.

Fig.1

0222377

Fig. 2

Fig. 3

0222377

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | AT-B- 374 073 (SOMMER) * Insgesamt * | 1,6,9 | A 01 B 17/00 A 01 B 3/46 A 01 B 15/18 |
| A | | 5,11 | |
| | --- | | |
| X | GB-A-1 249 243 (NATIONAL RESEARCH DEVELOPMENT CORP.) * Insgesamt * | 1,9 | |
| | --- | | |
| X | US-A-2 244 538 (KASTEN) * Insgesamt * | 1,5 | |
| | --- | | |
| X | US-A-2 670 670 (ALLISON) * Insgesamt * | 1 | |
| | --- | | RECHERCHIERTE SACHGEBIETE (Int Cl 4) |
| A | GB-A- 928 424 (LEMKEN) * Figur 1 * | 2,3,8 | |
| | --- | | A 01 B |
| A | FR-A- 513 105 (BENARD) * Figuren 1-4 * | 12 | |
| | --- | | |
| A | FR-A-1 434 372 (HUARD-U.C.F.) * Insgesamt * | 12 | |
| | --- | | |
| A | GB-A-2 122 463 (DOWDESWELL) * Figuren 1,2 * | 12 | |
| | ---        -/- | | |

Der vorliegende Recherchenbericht wurde für alle Patentansprüche erstellt.

| Recherchenort | Abschlußdatum der Recherche | Prüfer |
|---|---|---|
| DEN HAAG | 20-01-1987 | VERDOODT S.J.M. |

Europäisches
Patentamt

EUROPÄISCHER RECHERCHENBERICHT

Nummer der Anmeldung

**0222377**

EP  86 11 5686

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE-C-1 125 700   (BRAUNE) | | |
| A | US-A-2 877 857   (BAASEN) | | |

RECHERCHIERTE
SACHGEBIETE (Int Cl 4)

Der vorliegende Recherchenbericht wurde für alle Patentansprüche erstellt.

| Recherchenort | Abschlußdatum der Recherche | Prüfer |
|---|---|---|
| DEN HAAG | 20-01-1987 | VERDOODT S.J.M. |